# EUROPÄISCHE PATENTANMELDUNG

(11) **EP 2 151 297 A1**
(43) Veröffentlichungstag der Anmeldung: **10.02.2010**
(21) Anmeldenummer: 09166823.6
(22) Anmeldetag: 30.07.2009
(51) Int. Cl.: B23K 26/10, B23K 26/08, B23Q 1/54, B23Q 1/62, B25J 19/00, B25J 19/02, B25J 19/04, B25J 21/00

(54) **Vorrichtung zum einseitigen Bearbeiten von Werkstücken mittels Laserstrahlung mit Trägern und einem Mehrachsroboter**

(30) Priorität: 06.08.2008 DE 102008037169
(71) Anmelder: JENOPTIK Automatisierungstechnik GmbH, 07745 Jena (DE)
(72) Erfinder: Zintl, Andreas, 99869 Wandersleben (DE); Mangols, Thomas, 99087 Erfurt (DE)
(74) Vertreter: Schaller, Renate

(57) **Zusammenfassung**

Diese Anmeldung betrifft eine Vorrichtung zum einseitigen Bearbeiten von Werkstücken mittels Laserstrahlung mit einer Tragkonstruktion bestehend aus zwei ortsfest horizontal zueinander parallel angeordneten Trägern (3), die gemeinsam für einen ersten Schlitten (4) eine erste Führung in x-Richtung aufweisen, sowie einem zweiten Schlitten (5), der über eine zweite Führung in y-Richtung am ersten Schlitten (4) geführt ist, und einem Bearbeitungskopf (6), der mit dem zweiten Schlitten (5) in Verbindung steht, sowie einem ortsfesten Laser (2) und auf der Tragkonstruktion angeordneten optischen Umlenkelementen, über die die vom Laser (2) emittierte Laserstrahlung in den Bearbeitungskopf (6) eingekoppelt wird, wobei ein Mehrachsroboter (1) vorhanden ist, an dessen freiem Ende der Bearbeitungskopf (6) befestigt ist, um ihn entlang einer freiwählbaren Bearbeitungskurve in der x-y-Ebene über ein unterhalb der Tragkonstruktion positioniertes Werkstück zu bewegen.

## Beschreibung

Die Erfindung betrifft eine Vorrichtung, die insbesondere geeignet ist, Bearbeitungsverfahren an einem Werkstück mittels Laserstrahlung auszuführen, bei denen die Laserstrahlung und das Werkstück in einer horizontalen Ebene relativ zueinander bewegt werden müssen.
In Abhängigkeit vom Material und den Dimensionen des Werkstückes kann die Vorrichtung durch die Auswahl des Lasertyps und der Verfahrensparameter z.B. zum Schneiden, Perforieren, Ritzen, Gravieren, Bohren und Beschriften sowie zum Abtragen von Schichten vorteilhaft verwendet werden.

Vorrichtungen zum Bearbeiten eines Werkstückes mittels Laserstrahlung bestehen im Wesentlichen aus einem Laser, einem Bearbeitungskopf, der die Laserstrahlung auf das Werkstück richtet, einer Einrichtung zur Führung der vom Laser emittierten Laserstrahlung zum Bearbeitungskopf hin und einer Einrichtung zur Relativbewegung zwischen dem Bearbeitungskopf als Werkzeug und dem Werkstück.

Insbesondere für große Werkstücke wird diese Relativbewegung durch den Bearbeitungskopf ausgeführt, während das Werkstück ortsfest gehalten wird. Es ist bekannt, hierfür Mehrachsroboter oder Portale zu verwenden.

Zur Führung der Laserstrahlung zum Bearbeitungskopf hin sind Lichtleitfaserkabel und Spiegelstrahlführungen bekannt, wobei erstgenanntes abhängig vom Lasertyp und der zu übertragenden Strahlungsenergie nur begrenzt anwendbar ist und somit z.B. nicht für die Übertragung von CO₂-Laserstrahlung geeignet ist.

Aus der DE 198 21 211 A1 ist eine Vorrichtung bekannt, bei der ein Laserstrahlkopf (Bearbeitungskopf) mittels eines gesteuerten Manipulators (Mehrachsroboters) frei im Raum bewegbar ist und die Strahlführung über eine geschlossene Spiegelstrahlführung in einem Strahlübertragungsarm erfolgt, der am Laserstrahlkopf befestigt ist.

Bei einem in der DE 10 2004 051 225 A1 offenbarten Roboter wird die von einem am Roboter befestigten Laser kommende Laserstrahlung in den Roboter eingekoppelt und durch innenliegende Spiegel zur Strahlaustrittsöffnung geführt. Der Roboter erfüllt damit die Funktion der Bewegung des Bearbeitungskopfes, hier als Scanner ausgeführt, und die Funktion der Strahlübertragung.
Bei einer solchen in einem Roboter integrierten Strahlführung ist der innerhalb der Roboterachsen erforderliche Platzbedarf und die Vielzahl der in den Achsen installierten Spiegel ein Grund für größeren baulichen Aufwand. Um diesen Aufwand gering zu halten, gibt es Vorschläge und auch aus der Praxis bekannte Vorrichtungen, bei denen der Laser an einer zum Bearbeitungskopf nahen Achse des Roboters befestigt ist. Dies hat allerdings wiederum den Nachteil, dass das Gewicht des Lasers eine entsprechend massivere Ausführung des Roboters und einen leistungsstärkeren Antrieb erforderlich macht.

Sowohl bei einer Strahlführung in einem mitbewegten Strahlübertragungsarm, wie z.B. gemäß der DE 198 21 211 A1, als auch innerhalb eines angetriebenen Roboters, wie z.B. gemäß der DE 10 2004 051 225 A1, werden hohe Anforderungen an die Stabilität der Spiegelpositionen gestellt, der eine permanente dynamische Belastung entgegensteht.

Sofern die Anwendung einer Vorrichtung zum Bearbeiten eines Werkstückes mittels Laserstrahlung darauf beschränkt ist, die Laserstrahlung stets in der gleichen Richtung auf das Werkstück zu richten, ist eine Bewegungsfreiheit, wie sie z.B. mit einem 6-Achs-Roboter für drei Translationsrichtungen und drei Rotationsrichtungen gegeben ist, nicht erforderlich. Grundsätzlich reichen zwei translatorische Freiheitsgrade, um die Laserstrahlung von jedem Punkt in einer Ebene auf das Werkstück richten zu können.
Es ist bekannt hierzu den Bearbeitungskopf an einer Tragkonstruktion, oder auch Portal genannt, zu führen und die von einem feststehenden Laser kommende Laserstrahlung über auf der Tragkonstruktion montierte optische Umlenkelemente in den Bearbeitungskopf einzukoppeln. Die dynamische Belastung auf die optischen Umlenkelemente ist ausschließlich durch translatorisch wirkende Kräfte bestimmt, d.h. es wirken keine Momente.

Eine solche Tragkonstruktion besteht grundsätzlich aus zwei horizontal zueinander parallel ausgerichteten ortsfesten Trägern mit einer Führung, in der ein erster Schlitten in Richtung einer ersten Achse (x-Achse) geführt wird. Der erste Schlitten weist ebenfalls eine Führung auf, in der ein zweiter Schlitten angeordnet ist, der senkrecht zur ersten Achse in Richtung einer zweiten Achse (y-Achse) verfahrbar ist.
An dem zweiten Schlitten ist der Bearbeitungskopf befestigt bzw. kann über eine weitere Führung in Richtung einer dritten Achse (z-Achse) bewegt werden. Die Tragkonstruktion stellt somit ein Zwei- bzw. Drei-Koordinaten-Führungssystem dar.

Die Genauigkeitsanforderungen an dieses Führungssystem sind gegeben durch die geforderte Positioniergenauigkeit der Achse des Bearbeitungskopfes auf dem Werkstück, mehr jedoch durch die Forderung, dass die Winkellage der optischen Umlenkelemente, in der Regel Planspiegel, zueinander stabil bleibt, um die Laserstrahlung stets so in den Bearbeitungskopf einzukoppeln, dass die Achse des Bearbeitungskopfes und die Strahlungsachse der Laserstrahlung zusammenfallen.
Am schwierigsten stellt sich die verkippungsfreie Führung des ersten Schlittens dar, da eine mittige Anordnung des Antriebes zwischen den Führungsschienen nicht möglich ist.

Aus der DE-OS 34 00 017 ist es bekannt, zur Führung des ersten Schlittens zwei Spindelantriebe oder Linearmotoren vorzusehen, die jeweils außerhalb des Verfahrbereiches des zweiten Schlittens angeordnet und mit einem Messsystem gekoppelt sind. Eine Synchronansteuerung beider Antriebe über die Messsysteme soll den angestrebten Gleichlauf und damit eine verkippungsfreie Führung gewährleisten.
Einen tatsächlich hinreichenden Gleichlauf zu erreichen, wird mit größer werdendem Verfahrweg und damit mit zunehmendem Abstand der Führungsteile auf den beiden Trägern schwieriger.

Der zweite Schlitten wird über einen Antrieb verfahren. Die Gefahr der Verkippung ist hier kaum gegeben, da die Antriebskraft stets auf den Schwerpunkt des zweiten Schlittens wirkt.
Eine am zweiten Schlitten angeordnete Bearbeitungseinheit (Bearbeitungskopf) kann zusätzlich in z-Richtung verschoben werden. Diese Verstellmöglichkeit ist für die genaue Abstandsjustierung zur Werkstückoberfläche von Vorteil. Sie kann entweder manuell oder über Sensoren gesteuert werden. Bevorzugt soll die Bearbeitungseinheit auch in horizontaler und vertikaler Richtung drehbar sein, um gekrümmte Werkstückoberflächen mit senkrecht auftreffender Laserstrahlung beaufschlagen zu können.
Die Dimensionierung der Tragkonstruktion und der Antriebe ist bestimmt durch die Größe der maximal zu bearbeitenden Werkstücke. Das heißt auch, dass der Raumbedarf einer Vorrichtung mit einer Tragkonstruktion bestimmt ist durch den notwendigen Bewegungsbereich für ein maximal großes Werkstück, während der Raumbedarf bei einer Vorrichtung mit einem Roboter auf den jeweils konkret benötigten Bewegungsbereich begrenzt werden kann.

Alle vorgenannten Lösungsmöglichkeiten sind in Abhängigkeit von der konkreten Anwendung mehr oder weniger gut geeignet.

Es ist die Aufgabe der Erfindung, eine alternative Vorrichtung zum einseitigen Bearbeiten von Werkstücken mittels Laserstrahlung zu finden, die unter Nutzung eines handelsüblichen Roboters mit einem geringen konstruktiven Aufwand kostengünstig herstellbar ist.
Vorteilhaft soll die Vorrichtung als eine kompakte Einheit transportabel sein und damit flexibel in den Ablauf von Fertigungsprozessen integriert werden können.

Diese Aufgabe wird für eine erfindungsgemäße Vorrichtung gemäß dem Oberbegriff des Anspruches 1 gelöst.
Vorteilhafte Ausführungen sind in den Unteransprüchen beschrieben.

Bei einem nur einseitigen Bearbeiten eines Werkstückes, bei dem die Laserstrahlung stets aus der gleichen Richtung kommend auf ein ortsfest positioniertes Werkstück gerichtet werden soll, ist die hierfür notwendige Relativbewegung zwischen der Laserstrahlung als Werkzeug und dem Werkstück auf zwei translatorische Freiheitsgrade (x-, y-Achse) beschränkt bzw. drei translatorische Freiheitsgrade (x-, y-, z-Achse), wenn eine Abstandsänderung der Laserstrahlung mit ihrem Fokus zur Werkstückoberfläche möglich sein soll. Eine zusätzlicher rotatorischer Freiheitsgrad (um die z-Achse) ist von Vorteil, um den Strahlquerschnitt, der häufig elliptisch ist, auf die Bearbeitungsrichtung auszurichten, oder um bei einer exzentrischen Montage des Bearbeitungskopfes z.B. Kreise auszuschneiden.

Es ist erfindungswesentlich, dass die Bewegung des Bearbeitungskopfes über einen handelsüblichen Roboter erfolgen kann und die Laserstrahlung über eine Spiegelstrahlführung auf einer Tragkonstruktion in den Bearbeitungskopf geführt wird.

Dadurch, dass die Tragkonstruktion keine Antriebe, sondern nur sich selbst und die optischen Umlenkelemente zu tragen hat, kann sie extrem leicht ausgeführt werden und die Schlitten sind mit einer nur geringen Kraft verschiebbar. Der Antrieb der Schlitten erfolgt mittelbar über die Bewegung des am Roboter befestigten und mit dem zweiten Schlitten in Verbindung stehenden Bearbeitungskopfes.
Da die notwendige Verschiebekraft nur gering ist, sind auch wirkende Momente entlang den Führungen des ersten Schlittens, die zu Verkippungen des ersten Schlittens gegenüber den Trägern führen könnten, nur gering.
Durch eine mittige Positionierung des Bearbeitungskopfes und damit mittige Positionierung des zweiten Schlittens zum ersten Schlitten in der Ausgangsstellung des Bearbeitungskopfes, die im Zentrum des Bewegungsbereiches liegt, werden die auf die Führungen wirkenden Momente weiter reduziert. Mit dem Verschiebeweg aus der Ausgangsstellung des zweiten Schlittens auf dem ersten Schlitten entsteht in Abhängigkeit von der Richtung und der Länge des Verschiebeweges und der konstanten Verschiebekraft ein auf den ersten Schlitten wirkendes Moment, welches jedoch aufgrund der geringen Verschiebekraft nur sehr gering ist und nicht zu einem Verkanten des zweiten Schlittens führt.
Die Führungen sind vorzugsweise als Wälzführungen, insbesondere als Rollenführungen ausgeführt, wodurch die Reibung in der Führung minimiert wird, was wiederum zu einer nur geringen notwendigen Verschiebekraft beiträgt.

Der Roboter ist unterhalb der Tragkonstruktion fest angeordnet. Bevorzugt ist er mit seinem festen Ende ebenso wie die Träger der Tragkonstruktion an den Wänden bzw. dem Rahmen eines die Vorrichtung einschließenden Gehäuses befestigt. Damit entsteht eine geschlossene transportable Bearbeitungskammer, in der das Werkstück bearbeitet werden kann.

Die Erfindung soll nachfolgend in einem Ausführungsbeispiel anhand einer Zeichnung näher erläutert werden. Hierin zeigt:
- Fig. 1: eine schematische Ansicht einer Vorrichtung
- Fig. 2: eine vergrößerte schematische Darstellung wesentlicher Baugruppen einer Vorrichtung

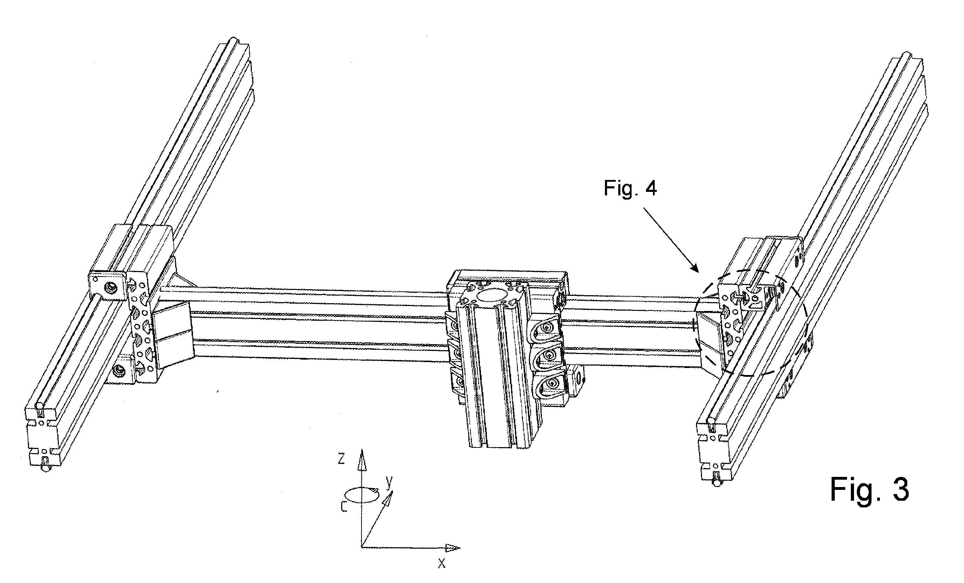

- Fig. 3: eine Tragkonstruktion
- Fig. 4: eine Teilansicht der Tragkonstruktion gemäß Fig. 3

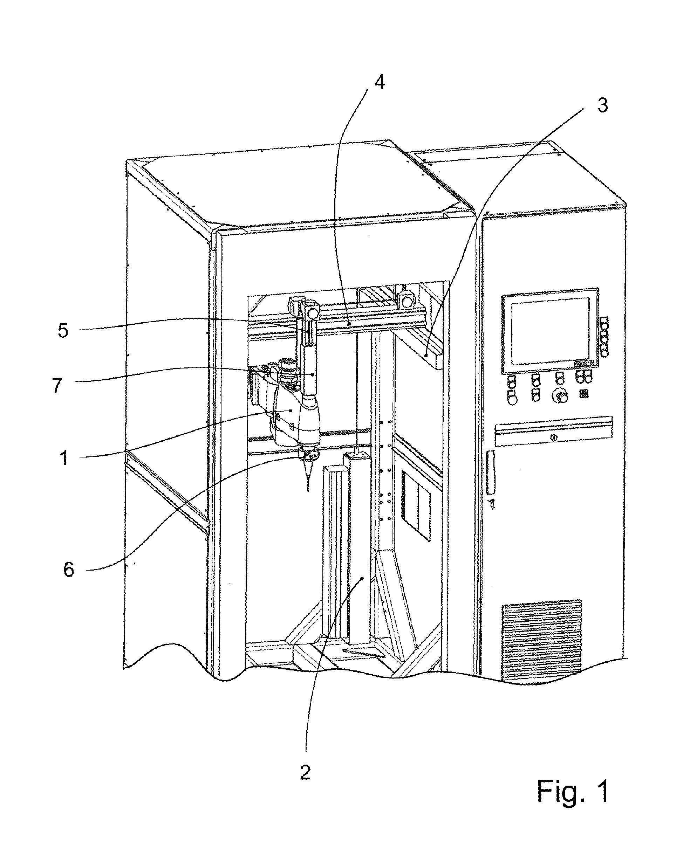

Fig. 1 zeigt eine erste Ausführung einer Vorrichtung mit einem Mehrachsroboter 1, einem Laser 2 und einer Tragkonstruktion, die durch die Länge ihrer beiden Träger 3 und eines ersten Schlittens 4 die Größe eines Bewegungsraumes für einen am Mehrachsroboter 1 montierten Bearbeitungskopf 6 begrenzt.
Der Mehrachsroboter 1 ist vorteilhaft so dimensioniert, dass er diesen durch die Tragkonstruktion begrenzten Bewegungsraum voll ausschöpfen kann.
Idealerweise ist der Mehrachsroboter 1 so unterhalb der Tragkonstruktion angeordnet, dass sich die Ausgangsstellung des Bearbeitungskopfes 6 in der Mitte des Bewegungsraumes befindet.

Die Tragkonstruktion besteht aus den genannten zwei Trägern 3, die horizontal zueinander parallel angeordnet sind und gemeinsam eine erste Führung aufweisen, auf der der genannte erste Schlitten 4 in Richtung der x-Achse eines in den Mittelpunkt des Bewegungsraumes gedachten kartesischen Koordinatensystems verschoben werden kann. An dem ersten Schlitten 4 ist eine zweite Führung vorhanden, entlang der ein zweiter Schlitten 5 in Richtung der y-Achse bewegbar angebracht ist.
Vorteilhaft ist am zweiten Schlitten 5 eine dritte Führung vorhanden, an der der Bearbeitungskopf 6 mittelbar über ein mit dem Bearbeitungskopf 6 verbundenes Führungsteil 7 in Richtung der z-Achse verschiebbar ist. Damit kann der Bearbeitungskopf 6 nicht nur in einer x-y-Ebene über ein darunter platziertes Werkstück bewegt werden, sondern auch in seinem Abstand zum Werkstück verändert werden, womit auch Werkstücke mit gekrümmten Oberflächen bearbeitet werden können.

In der hier beschriebenen ersten Ausführungsform soll der Bearbeitungskopf 6 vorteilhaft in dem Führungsteil 7 drehbar gelagert sein, womit zusätzlich zu den drei bereits gegebenen translatorischen Freiheitsgraden ein rotatorischer Freiheitsgrad, nämlich die Drehung um die z-Achse hinzu kommt. Durch diese Drehbarkeit kann zum einen ein nicht kreisrunder Strahlquerschnitt mit seinen Achsen permanent in Bewegungsrichtung ausgerichtet werden, oder bei einer exzentrischen Lagerung des Bearbeitungskopfes 6 können kleine Kreise mit der Laserstrahlung auf dem Werkstück beschrieben werden, womit z.B. Löcher geschnitten werden können.

Die vier Freiheitsgrade, die dem Bearbeitungskopf 6 durch seine Verbindung mit der Tragkonstruktion gegeben sind, muss auch der Mehrachsroboter 1 haben. Das heißt, idealerweise wird ein Vierachs-Roboter verwendet.

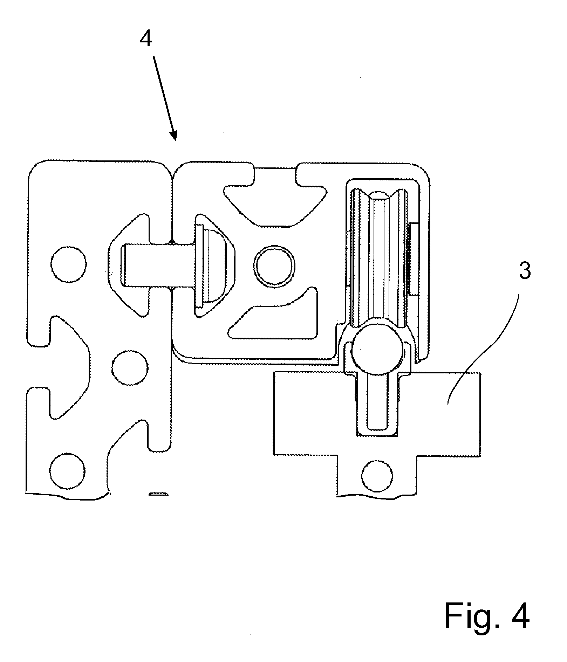

Da erfindungsgemäß ein handelsüblicher Mehrachsroboter 1 für die Vorrichtung Verwendung finden soll, kann die Laserstrahlung nicht durch die Roboterarme zu dem am freien Ende des Mehrachsroboters 1 montierten Bearbeitungskopf 6 geführt werden. Erfindungsgemäß wird die Laserstrahlung vom Laser 2 über mehrere Umlenkelemente in den Bearbeitungskopf 6 geführt, die im Wesentlichen auf den vom Mehrachsroboter 1 mitgenommenen Schlitten 4, 5 der Tragkonstruktion angebracht sind.
Die Strahlführung kann als offene oder geschlossene Spiegelstrahlführung, z.B. durch Faltenbälge geschützt ausgeführt sein.
Das Prinzip der Tragkonstruktion und die Anordnung der Umlenkelemente darauf unterscheiden sich vom Stand der Technik grundsätzlich dadurch, dass für die einzelnen Schlitten 4, 5 keine unmittelbar auf diese wirkenden Antriebe an der Tragkonstruktion befestigt vorhanden sind. Die einzelnen Bauteile der Tragkonstruktion tragen demnach nur sich selbst und die Umlenkelemente, wodurch mit geringem Gewicht und einer vernachlässigbaren Reibung in den als Rollenführungen ausgelegten Führungen, siehe Fig. 4, eine nur geringe Verschiebekraft erforderlich ist, um die Schlitten 4, 5, mitgenommen vom am Mehrachsroboter 1 befestigten Bearbeitungskopf 6, verkantungsfrei zu bewegen.

In der beschriebenen ersten Ausführungsform sind der Laser 2, der Mehrachsroboter 1 und die Träger 3 an dem Rahmen bzw. den Wänden eines die Vorrichtung umschließenden Gehäuses befestigt. Die Grundfläche des Gehäuses ist rechteckig, wobei die Seitenlängen der Grundfläche durch die Länge der Träger 3 und die Länge des ersten Schlittens 4 bestimmt sind. Für eine Werkstückaufnahme, hier nicht dargestellt, die individuell für die Geometrie eines zu bearbeitenden Werkstückes ausgebildet ist, ist über die Vorgabe der Höhe des Gehäuses unterhalb des Bearbeitungskopfes 6 ausreichend Platz vorgesehen.

Eine Steuerung für die Vorrichtung ist in einer nebengestellten Box untergebracht, wodurch der Innenraum des Gehäuses weitgehend als Bearbeitungsraum zur Verfügung steht. Die eingehauste Vorrichtung stellt eine kompakte und transportable Baueinheit dar, die örtlich flexibel schnell an anderer Stelle in den Fertigungsprozessablauf integriert werden kann.

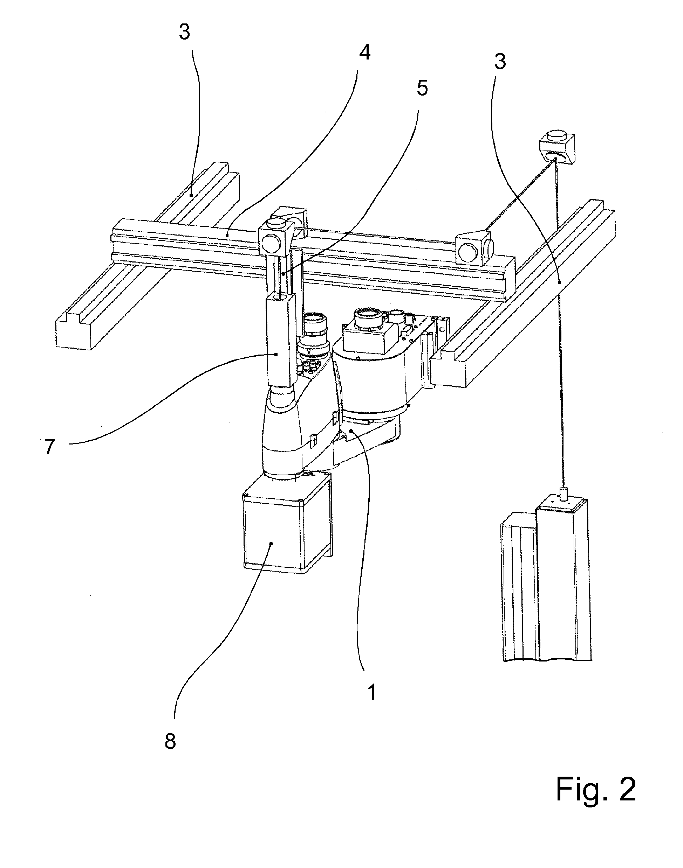

Entsprechend einer zweiten Ausführung einer Vorrichtung kann, wie in Fig. 2 dargestellt, der Bearbeitungskopf 6 auch als Scanner 8 ausgeführt sein. Damit können kleine Bewegungen in der x-y-Ebene auch ohne Verschiebung der Schlitten 4, 5 ausgeführt werden.

### Aufstellung der verwendeten Bezugszeichen:

- 1: Mehrachsroboter
- 2: Laser
- 3: Träger
- 4: erster Schlitten
- 5: zweiter Schlitten
- 6: Bearbeitungskopf
- 7: Führungsteil
- 8: Scanner

## Patentansprüche

1. Vorrichtung zum einseitigen Bearbeiten von Werkstücken mittels Laserstrahlung mit einer Tragkonstruktion bestehend aus zwei ortsfest horizontal zueinander parallel angeordneten Trägern (3), die gemeinsam für einen ersten Schlitten (4) eine erste Führung in x-Richtung aufweisen, sowie einem zweiten Schlitten (5), der über eine zweite Führung in y-Richtung am ersten Schlitten (4) geführt ist, und einem Bearbeitungskopf (6), der mit dem zweiten Schlitten (5) in Verbindung steht, sowie einem ortsfesten Laser (2) und auf der Tragkonstruktion angeordneten optischen Umlenkelementen, über die die vom Laser (2) emittierte Laserstrahlung in den Bearbeitungskopf (6) eingekoppelt wird, **dadurch gekennzeichnet,**
**dass** ein Mehrachsroboter (1) vorhanden ist, an dessen freiem Ende der Bearbeitungskopf (6) befestigt ist, um ihn entlang einer freiwählbaren Bearbeitungskurve in der x-y-Ebene über ein unterhalb der Tragkonstruktion positioniertes Werkstück zu bewegen.

2. Vorrichtung nach Anspruch 1, **dadurch gekennzeichnet,**
**dass** der Bearbeitungskopf (6) am zweiten Schlitten (5) über eine dritte Führung mit diesem in Verbindung steht, um den Bearbeitungskopf (6) in Richtung der z-Achse senkrecht zur x-y-Ebene bewegen zu können.

3. Vorrichtung nach Anspruch 2, **dadurch gekennzeichnet,**
**dass** der Bearbeitungskopf (6) in einem zum zweiten Schlitten (5) linear geführten Führungsteil (7) drehbar gelagert ist, um den Bearbeitungskopf (6) um die z-Achse drehen zu können.

4. Vorrichtung nach Anspruch 3, **dadurch gekennzeichnet,**
**dass** der Bearbeitungskopf (6) im Führungsteil (7) exzentrisch gelagert ist, so dass bei Drehung des Bearbeitungskopfes (6) um die z-Achse eine Kreisbahn beschrieben wird.

5. Vorrichtung nach einem der vorangehenden Ansprüche, **dadurch gekennzeichnet,**
**dass** ein Gehäuse vorhanden ist, welches die gesamte Vorrichtung umschließt, und der Mehrachsroboter (1), der Laser (2) und die Träger (3) am Gehäuse befestigt sind.

6. Vorrichtung nach Anspruch 5, **dadurch gekennzeichnet,**
**dass** die innere Grundfläche des Gehäuses ein Rechteck darstellt, dessen Seitenlängen durch die Länge der Träger (3) und die Länge des ersten Schlittens (4) bestimmt sind, wodurch ein auf den Bearbeitungsraum optimiertes Gehäuse und somit eine kompakte Vorrichtung entsteht.

7. Vorrichtung nach einem der vorangehenden Ansprüche, **dadurch gekennzeichnet,**
**dass** die Führungen Wälzführungen sind.

8. Vorrichtung nach Anspruch 7, **dadurch gekennzeichnet,**
**dass** die Wälzführungen Rollenführungen sind.

9. Vorrichtung nach Anspruch 6, **dadurch gekennzeichnet,**
**dass** die Ausgangsstellung des Mehrachsroboters (1) in der Mitte des Bearbeitungsraumes liegt.

10. Vorrichtung nach einem der vorangehenden Ansprüche, **dadurch gekennzeichnet,**
**dass** der Bearbeitungskopf (6) als Scanner (8) ausgeführt ist.
